# EUROPEAN PATENT APPLICATION

(11) **EP 2 322 706 A2**
(43) Date of publication of application: **18.05.2011**
(21) Application number: 10189042.4
(22) Date of filing: 27.10.2010
(51) Int. Cl.: D06F 39/00

(54) **Washing machine and control method of the same**

(30) Priority: 16.11.2009 KR 20090110245
(71) Applicant: Samsung Electronics Co., Ltd., Suwon-si, Gyeonggi-do 506-762 (KR)
(72) Inventor: Han, Jeong Su, Gyeonggi-do (KR); Gennady, Ivanov, Gyeonggi-do (KR); Jeong, Jin Ha, Gyeonggi-do (KR); Lee, Hea Yun, Gyeonggi-do (KR); Choi, Hyen Young, Gyeonggi-do (KR); Shin, Seung Back, Seoul (KR); Lee, Sang Jun, Gyeonggi-do (KR); Ha, Ji Hoon, Gyeonggi-do (KR)
(74) Representative: Grünecker, Kinkeldey, Stockmair & Schwanhäusser Anwaltssozietät

(57) **Abstract**

Disclosed herein are a washing machine and a control method of the same wherein image change or light amount change based on displacement of an object, which is changed depending upon the weight of laundry, is sensed to detect the weight of the laundry, thereby improving reliability in detecting the weight of the laundry.

## Description

### BACKGROUND

### 1. Field

Embodiments discussed herein relate to a washing machine and a control method of the same that senses the weight of laundry.

### 2. Description of the Related Art

Generally, a washing machine (normally, a drum washing machine) includes a water tub mounted in a housing to receive water containing a detergent, i.e., detergent water, a rotary tub rotatably mounted in the water tub to wash laundry, and a door hingedly coupled to the front of the housing to open and close an opening formed at the front of the housing. Laundry is put into the rotary tub through the opening of the housing, a predetermined amount of detergent water is supplied into the water tub, and the rotary tub is rotated to wash the laundry.

When a user selects a washing course, the weight of the laundry is sensed to decide the amount of wash water, wash water sufficient to wet the laundry is supplied into the water tub together with a detergent according to the decided amount of wash water, and the rotary tub is rotated to perform a washing cycle and a spin-drying cycle.

When the weight of the laundry is accurately sensed, the amount of water corresponding to the sensed weight of the laundry is supplied to wash the laundry. Consequently, the amount of water and power used is reduced, thereby reducing energy consumption.

In the related art, laundry in the rotary tub is used as an inertia load, and inertia is estimated to sense the weight of the laundry. For example, predetermined voltage is applied to a motor to accelerate the rotary tub, and inertia is estimated using a change in voltage and velocity of the motor during acceleration of the rotary tub to sense the weight of the laundry.

In this method of sensing the weight of the laundry, no additional sensor is provided, thereby reducing material costs. However, a weight sensing error may occur according to the waveform of the voltage. Also, washing machines may have different deviations, with the result that an error may occur during sensing of the weight of the laundry.

### SUMMARY

It is an aspect of the embodiments to provide a washing machine and a control method of the same wherein image change or light amount change based on displacement of the object, which is changed depending upon the weight of laundry, is sensed to detect the weight of the laundry, thereby improving reliability in detecting the weight of the laundry.

Additional aspects of the embodiments will be set forth in part in the description which follows and, in part, will be apparent from the description, or may be learned by practice of the embodiments.

In accordance with one aspect of the embodiments, a washing machine includes an object whose displacement is changed depending upon weight of laundry, a sensor module to sense an image, light amount or optical pattern changed depending upon the displacement of the object, and a controller to detect the weight of the laundry based on the image change or the light amount change.

The object may be at least one of a suspension spring to support a water tub containing a rotary tub in a suspension manner, the water tub, a damper to dampen vibration generated from the water tub or combination thereof.

The sensor module may include a light source to irradiate light to the object, an image sensor to receive the light reflected from the object to create an image of the object, and an image processor to perform a comparison between a reference image, which is an image before the laundry is put into the rotary tub, and a current image, which is an image after the laundry is put into the rotary tub, to sense image change of the object.

The image processor may set a mask window of a predetermined size in the reference image, calculate correlation coefficient values while moving the mask window with respect to the entirety of the current image by an predetermined pixel unit, calculate a displacement value of the mask window with respect to a position having the largest correlation coefficient value, and recognize the calculated displacement value as an image change value of the object.

If the object is the damper, the sensor module may be provided at the damper to sense image change of the damper depending upon displacement of the damper.

The damper may include a cylinder and a piston mounted in the cylinder in an advancing and retreating manner, and the sensor module may be provided at the cylinder or the piston to sense image change of the cylinder or the piston depending upon displacement of the cylinder or the piston.

If the object is the water tub, the sensor module may be provided at a housing of the washing machine corresponding to the water tub to sense image change of the water tub depending upon displacement of the water tub.

The sensor module may sense image change of the water tub depending upon vertical displacement of the water tub.

If the object is the suspension spring, the sensor module may be provided at the suspension spring to sense image change of the suspension spring depending upon displacement of the suspension spring.

The object may be the water tub, the sensor module may include a light emitting unit to emit light and a light receiving unit to receive the light emitted from the light emitting unit, the sensor module being disposed such that an amount of the light, corresponding to displacement of the water tub, received by the light receiving unit is changed, and the controller may detect the weight of the laundry based on the change in the amount of the light received by the light receiving unit.

The light emitting unit may include a light source to emit light and a lens to disperse the light emitted from the light source such that the light is irradiated to the light receiving unit in parallel.

The object may be the water tub, the sensor module may include a light source unit to emit light and an optical pattern sensor to receive the light emitted from the light source unit, the sensor module being disposed such that an optical pattern, corresponding to displacement of the water tub, sensed by the optical pattern sensor is changed, and the controller may detect the weight of the laundry based on the optical pattern sensed by the optical pattern sensor.

In accordance with another aspect of the embodiments, a control method of a washing machine having an object whose displacement is changed depending upon weight of laundry includes sensing image change of the object depending upon the displacement of the object and detecting the weight of the laundry based on the sensed image change of the object.

The object may be at least one of a suspension spring to support a water tub containing a rotary tub in a suspension manner, the water tub, a damper to dampen vibration generated from the water tub, or combinations thereof.

Sensing image change of the object may include setting a mask window of a predetermined size in a reference image, which is an image of the object before the laundry is put into the rotary tub, calculating correlation coefficient values while moving the mask window with respect to the entirety of a current image, which is an image of the object after the laundry is put into the rotary tub, by an arbitrary pixel unit, and calculating a displacement value of the mask window with respect to a position having the largest correlation coefficient value.

### BRIEF DESCRIPTION OF THE DRAWINGS

These and/or other aspects of the embodiments will become apparent and more readily appreciated from the following description of the embodiments, taken in conjunction with the accompanying drawings of which:
FIG. 1 is a schematic side sectional view illustrating the structure of a drum washing machine according to an embodiment;
FIG. 2 is a front sectional view of the drum washing machine shown in FIG. 1;
FIG. 3 is a view illustrating the structure of a damper and a sensor module shown in FIG. 2;
FIG. 4 is a schematic front sectional view illustrating the structure of a drum washing machine according to another embodiment;
FIG. 5 is a schematic front sectional view illustrating the structure of a drum washing machine according to another embodiment;
FIG. 6 is a schematic control block diagram of the sensor module shown in FIGS. 3 to 5;
FIG. 7 is a control flow chart illustrating a process of sensing image change based on displacement of an object, which is changed depending upon the weight of laundry, in the drum washing machine shown in FIG. 2 to detect the weight of the laundry;
FIG. 8 is a view illustrating a pixel mapping process to determine a correlation coefficient between a reference image and a current image of FIG. 7;
FIG. 9 is a schematic front sectional view illustrating the structure of a drum washing machine according to another embodiment;
FIG. 10 is a schematic control block diagram of a sensor module shown in FIG. 9;
FIG. 11 is a control flow chart illustrating a process of sensing light amount change based on height of a water tub, which is changed depending upon the weight of laundry, in the drum washing machine shown in FIG. 9 to detect the weight of the laundry;
FIG. 12 is a schematic control block diagram of a drum washing machine according to a further embodiment; and
FIG. 13 is a view illustrating optical patterns based on the weight of laundry sensed by an image sensor shown in FIG. 12.

### DETAILED DESCRIPTION

Reference will now be made in detail to the embodiments, examples of which are illustrated in the accompanying drawings, wherein like reference numerals refer to like elements throughout.

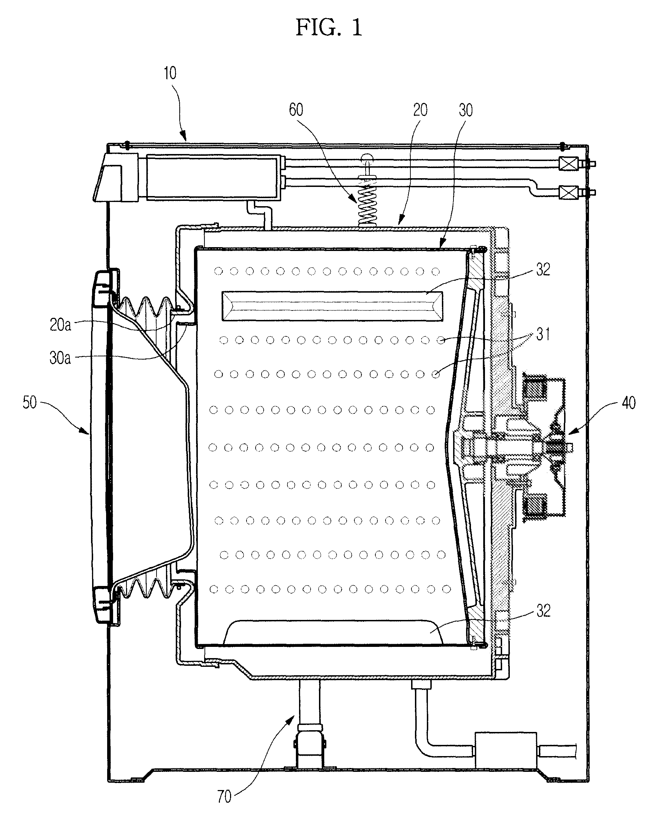

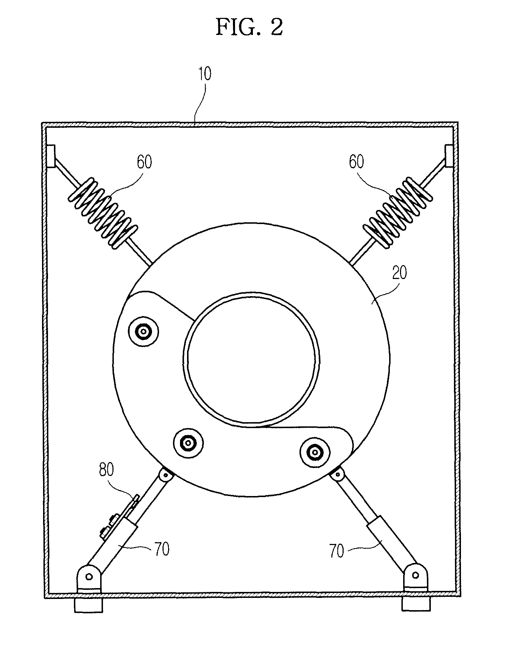

FIG. 1 is a schematic side sectional view illustrating the structure of a drum washing machine according to an embodiment, and FIG. 2 is a schematic front sectional view of the drum washing machine shown in FIG. 1.

As shown in FIGS. 1 and 2, the drum washing machine includes a box-shaped housing 10 forming the external appearance thereof, a water tub 20 provided in the housing 10 to contain water, a cylindrical rotary tub 30 rotatably mounted in the water tub 20, the rotary tub 30 having through holes 31 through which water and air pass, and a drive motor 40 to transmit rotational force to the rotary tub 30 such that the rotary tub 30 is rotated to wash and spin-dry laundry in the rotary tub 30.

The water tub 20 and the rotary tub 30 are partially open at the front middle portions thereof to constitute inlet ports 20a and 30a through which laundry is put into or removed from the rotary tub 30. To the front of the housing 10 is hingedly coupled a door 50 to open and close the inlet ports 20a and 30a of the water tub 20 and the rotary tub 30. At the inner circumference of the rotary tub 30 are arranged lifters 32 at predetermined intervals. During rotation of the rotary tub 30 in alternating directions, the laundry is lifted and dropped by the lifters 32, by which the laundry is washed.

In this embodiment, the drum washing machine also includes suspension springs 60 to elastically support the water tub 20 in which the rotary tub 30 is mounted and dampers 70 disposed below the water tub 20 to dampen vibration. The suspension springs 60 and the dampers 70 movably support the water tub 20 to prevent the occurrence of vibration during the operation of the drum washing machine.

Each of the dampers 70 is mounted to the water tub 20 at one end thereof and to the bottom of the housing 10 at the other end thereof to dampen vibration generated from the water tub 20 during rotation of the water tub 20. That is, vibration generated from the rotary tub during rotation of the rotary tub is transmitted to the water tub 20, with the result that the water tub 20 is vibrated in all directions, for example back and forth, side to side, and up and down. Such vibration of the water tub 20 is dampened by the suspension springs 60 and the dampers 70. A sensor module 80 is mounted to the damper 70.

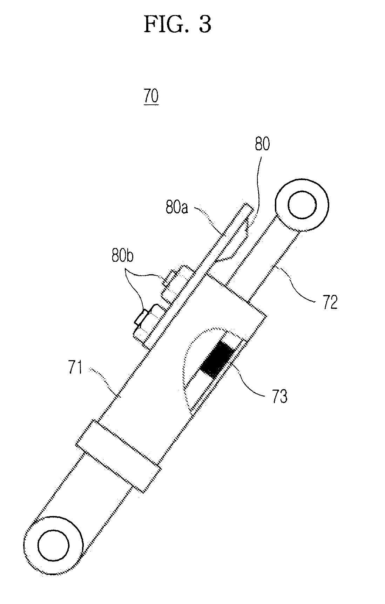

FIG. 3 is a view illustrating the structure of a damper and a sensor module shown in FIG. 2

As shown in FIG. 3, the damper 70 includes a cylinder 71 having one open end and the other end mounted to the bottom of the housing 10 of the washing machine, a piston 72 having one end mounted in the cylinder 71 in an advancing and retreating manner and the other end mounted to the bottom of the water tub 20, and a friction pad 73 having one major surface mounted to the piston 72 and the other major surface in tight contact with the inner surface of the cylinder 71 such that the friction pad 73 is advanced and retreated in the cylinder 71 together with the piston 72 to dampen vibration through friction between the friction pad 73 and the cylinder 71.

When vibration from the water tub 20 is transmitted to the damper 70, therefore, the friction pad 73 moves along the inner surface of the cylinder 71 according to the movement of the piston 72 to dampen vibration transmitted from the water tub 20 through friction between the friction pad 73 and the cylinder 71.

Also, the sensor module 80 is mounted to the damper 70 by a mounting unit 80a and 80b.

The mounting unit 80a and 80b includes a supporting member 80a to support the sensor module 80 and fixing members 80b to fix the supporting member 80a to the cylinder 71.

One side of the supporting member 80a is fixed to the cylinder 71 by the fixing members 80b, and the other side of the supporting member 80a extends from the corresponding end of the cylinder 71 by a predetermined length in the longitudinal direction thereof.

The sensor module 80 is mounted to the extension of the supporting member 80a such that the sensor module 80 is opposite to the piston 72 while being spaced apart from the piston 72 by a predetermined distance.

When laundry is put into the rotary tub 30, the water tub 20 descends vertically. At this time, the piston 72 of the damper 70 partially retreats into the cylinder 71. The heavier the laundry is, the more deeply the piston 72 retreats into the cylinder 71.

The sensor module 80 senses an image of the piston 72 before the laundry is put into the rotary tub 30, i.e., a reference image, and an image of the piston 72 after the laundry is put into the rotary tub 30, i.e., a current image. Image change is sensed using a correlation between the two images. The weight of the laundry is detected based on the image change.

The sensor module 80 may be mounted to the water tub 20 whose displacement is changed depending upon the weight of the laundry or to the housing 10 opposite to the water tub 20 or the corresponding suspension spring 60 to sense image change based on displacement of the suspension spring 60.

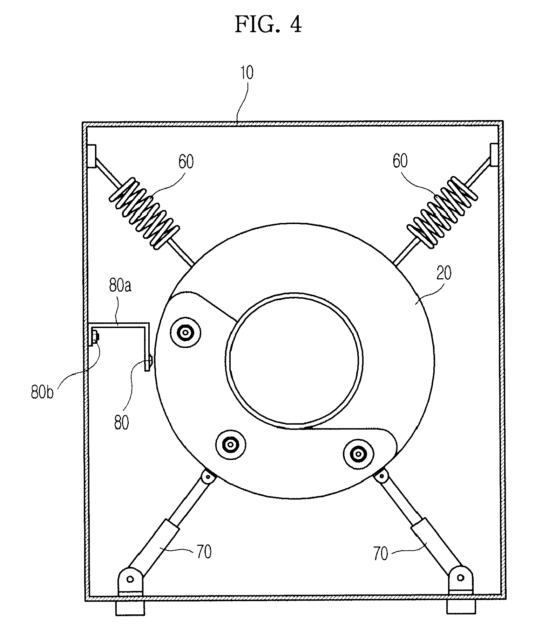

As shown in FIG. 4, the sensor module 80 may be mounted to a mounting unit 80a and 80b mounted at the housing 10 such that the mounting unit 80a and 80b is spaced apart from the water tub 20 by a predetermined distance. One side of the supporting member 80a of the mounting unit 80a and 80b is fixed to the housing 10 by the fixing member 80b, and the other side of the supporting member 80a extends from the housing 10 toward the water tub 20 by a predetermined length. The sensor module 80 is mounted to the portion of the supporting member 80a adjacent to the position opposite to the outer circumference of the water tub 20.

When laundry is put into the rotary tub 30, the water tub 20 descends vertically. The heavier the laundry is, the more the water tub 20 descends.

The sensor module 80 senses image change based on displacement of the water tub 20 before and after the laundry is put into the rotary tub 30. The weight of the laundry is detected based on the image change.

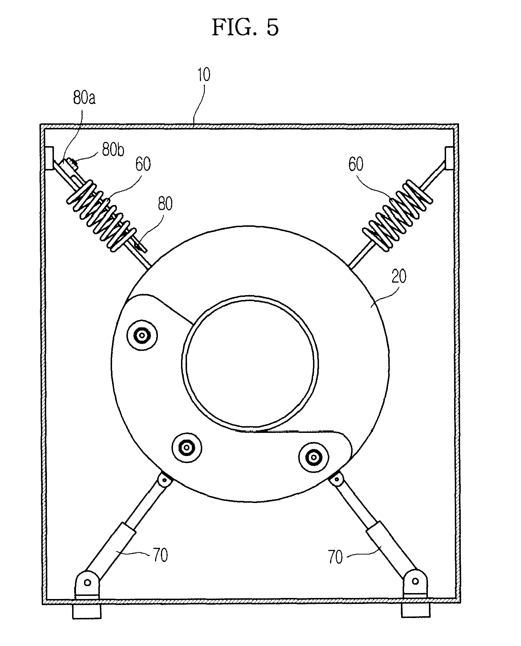

As shown in FIG. 5, the sensor module 80 may be mounted to a mounting unit 80a and 80b connected to the corresponding suspension spring 60. The supporting member 80a of the mounting unit 80a and 80b is formed in the shape of a cantilever. One side of the supporting member 80a is fixed to the portion of the suspension spring 60 adjacent to the connection between the suspension spring 60 and the housing 10 by the fixing member 80b, and the other side of the supporting member 80a extends through the suspension spring 60 toward the water tub 20. The sensor module 80 is mounted to the portion of the supporting member 80a adjacent to the water tub 20 such that the sensor module 80 is opposite to the suspension spring 60 while being spaced apart from the suspension spring 60 by a predetermined distance.

When laundry is put into the rotary tub 30, the water tub 20 descends vertically, with the result that the suspension spring 60 stretches. The heavier the laundry is, the more the suspension spring 60 stretches.

The sensor module 80 senses image change based on displacement of the suspension spring 60 before and after the laundry is put into the rotary tub 30. The weight of the laundry is detected (or determined) based on the image change.

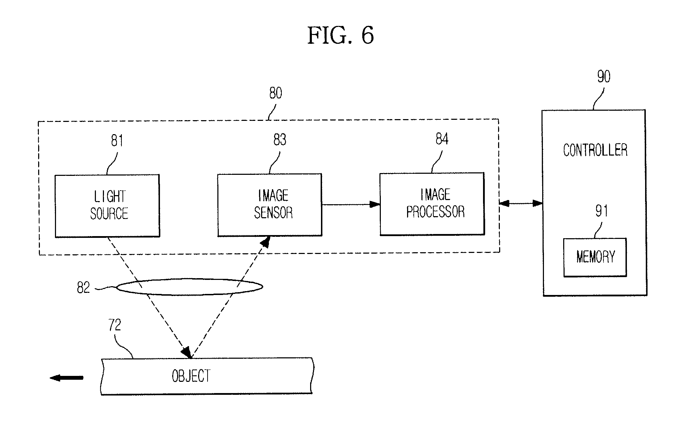

FIG. 6 is a schematic control block diagram of the sensor module shown in FIGS. 3 to 5.

As shown in FIG. 6, the sensor module 80 includes a light source 81, a lens 82, an image sensor 83 and an image processor 84.

The light source 81 may be composed of a light emitting diode (LED) or a laser. Light emitted from the light source is irradiated to an object 72. The object 72 may be the damper 70, the water tub 20 or the suspension spring 60 whose displacement is changed depending upon the weight of laundry.

The lens 82 adjusts the direction of the light emitted from the light source 81, such that the light is directed to the object 72, and the direction of the light reflected from the object 72, such that the light is directed to the image sensor 83.

The image sensor 83 receives the light reflected from the object 72 to create an image of the object 72. The image sensor 83 may include at least one charged coupled device (CCD) or complementary metal oxide semiconductor (CMOS) sensor. The image sensor 83 creates, for example, a two-dimensional image of the object 72.

The image processor 82 calculates displacement between two images using a general correlation algorithm to compare the two images.

The light source 81 and the image sensor 83 are incorporated into the sensor module 80 to achieve structural integration. The image processor 84 may also be incorporated into the sensor module 80 although the image processor 84 is disposed at another position.

The controller 90 communicates with the image processor 84 to receive the image change between the two images from the image processor 84 and retrieves the weight of laundry corresponding to the image change from the memory 91 to detect the weight of the laundry.

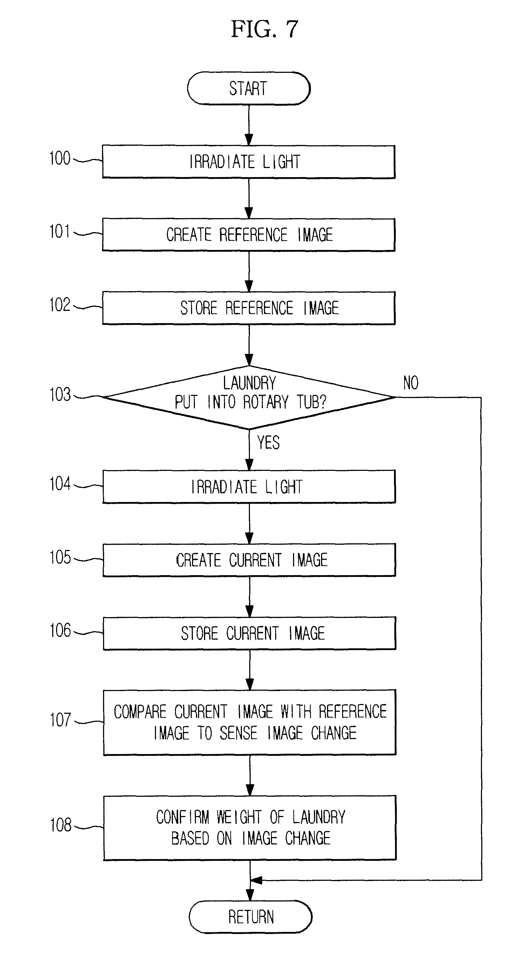

FIG. 7 is a flow chart illustrating a process of sensing image change based on displacement of an object, which is changed depending upon the weight of laundry, to detect the weight of the laundry.

Referring to FIG. 7 together with FIG. 6, the controller 90 commands the sensor module 80 to create (detect) and store an image of the object 72 before laundry is put into the rotary tub 30.

Upon receiving the command from the controller 90, the sensor module 80 irradiates light to the object 72 through the light source 81. The light emitted from the light source 81 is irradiated to the object 72 through the lens 82. The light irradiated to the object 72 is reflected from the object 72 and is received by the image sensor 83 through the lens 82.

The sensor module 80 creates (detects) an image of the object 72 using the light reflected from the object 72 and received by the image sensor 83 (101).

The controller 90 receives the image of the object 72 from the sensor module 80 to store the same in the memory 91 as a reference image or signal of the object 72 (102). At this time, the image of the object 72 may be stored in a memory (not shown) of the sensor module 80. It is understood that operations 100-102 may be omitted. A reference image of the object may be stored when manufactured or downloaded using a wired or wireless network.

The controller 90 determines whether laundry has been put into the rotary tub 30 (103). The determination as to whether the laundry has been put into the rotary tub 30 may be achieved based on the operation of the door, a laundry sensor, or a user command.

Upon determining at Operation 103 that the laundry has not been put into the rotary tub 30, the controller 90 returns to a predetermined routine.

On the other hand, upon determining at Operation 103 that the laundry has been put into the rotary tub 30, the controller 90 commands the sensor module 80 to create and store an image of the object 72 again. At this time, when the laundry has been put into the rotary tub 30, the object 72 is moved in the direction indicated by an arrow in FIG. 6 according to the weight of the laundry, with the result that the image of the object 72 created by the sensor module 80 is changed.

According to the command from the controller 90, the sensor module 80 irradiates light to the object 72 through the light source 81 (104). At this time, the light emitted from the light source 81 is irradiated to the object 72 through the lens 82, and the light irradiated to the object 72 is reflected from the object 72 and received by the image sensor 83 through the lens 82.

The sensor module 80 creates (detects) an image of the object 72 using the light reflected from the object 72 and received by the image sensor 83 (105).

The controller 90 receives the image of the object 72 from the sensor module 80 to store the same in the memory 91 as a current image of the object 72 (106). At this time, the image of the object 72 may be stored in the memory of the sensor module 80.

The controller 90 senses image change between the reference image and the current image of the object 72 through the sensor module 80 (107). The image processor 84 compares the current image of the object 72 with the reference image of the object 72 to sense the image change of the object 72. It is understood that sensor module may detect a signal from image and store the detected signal and compare it with a reference signal.

Subsequently, the controller 90 retrieves the weight of laundry corresponding to the image change between the reference image and the current image of the object 72 from the memory 91 (such as a table that lists change and corresponding weight) to detect the weight of the laundry (108).

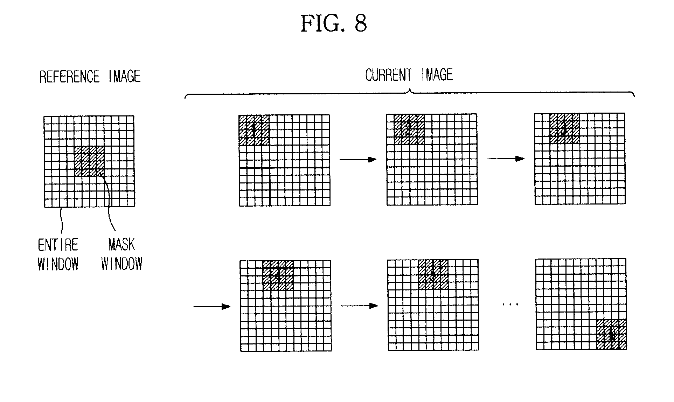

As shown in FIG. 8, the image change based on displacement of the object, which is changed depending upon the weight of the laundry, is detected by comparison between the reference image and the current image of the object 72. An image of the object before the laundry is put into the rotary tub 30 is set as the reference image on which a mask window is defined. The mask window is a common portion between the reference image and the current image. When comparing the mask window with the current image, the pixels in the mask window are compared with the total pixels of the input frame although each pixel in the mask window may be compared with the most adjacent pixel thereof.

In this embodiment, the mask window (for example, a window of 4 x 4 pixels) is set from the reference image (for example, an image of 12 x 12 pixels), and the mask window is moved with respect to the entirety of the current image (for example, an image of 12 x 12 pixels) by an arbitrary pixel unit (for example, one pixel) to determine a correlation coefficient.

Comparison between the mask window of the reference image and a first region of the current image is performed to determine a correlation coefficient, and comparison between the mask window of the reference image and a second region of the current image is performed to determine a correlation coefficient. This process is repeatedly performed until comparison between the mask window of the reference image and an Nth region of the current image is performed.

At the position having the largest correlation efficient, X-axis and Y-axis displacement values (image change values) are created. X-axis and Y-axis displacement values may include a range from the coordinate values (0, 0) of the object 72 before the laundry is put into the rotary tub 30 to the maximum coordinate values (n, n) of the object 72. For reference, the object 72 is rectilinearly moved, and therefore, the X-axis displacement value may be created as an effective value. The maximum displacement value n is decided based on the entire window size of the current image and the mask window size of the reference image.

The obtained image change value, indicating the displacement of the object 72, is provided to the controller 90 which uses the image change value to detect the weight of the laundry.

Hereinafter, a process of sensing light amount change based on height of a water tub, which is changed depending upon the weight of laundry, to detect the weight of the laundry will be described.

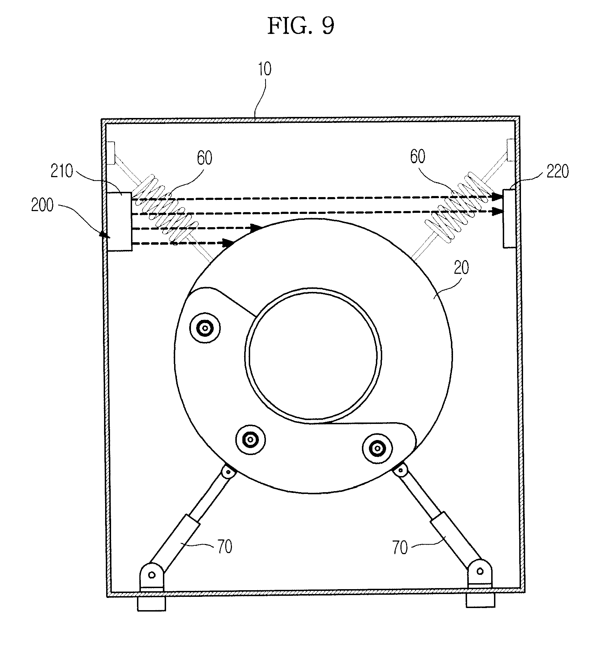

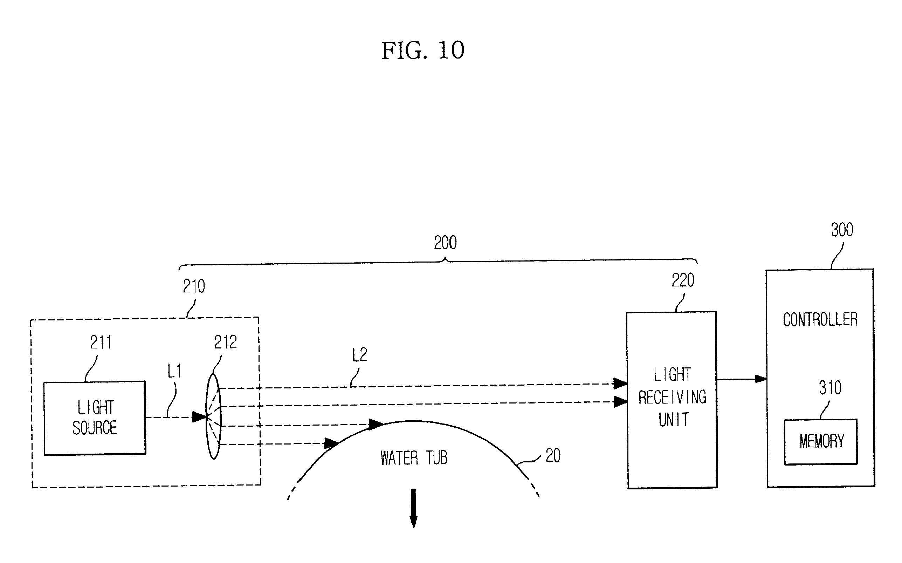

FIG. 9 is a schematic front sectional view illustrating the structure of a drum washing machine according to another embodiment. FIG. 10 is a schematic control block diagram of a sensor module 200 shown in FIG. 9.

As shown in FIG. 9, the sensor module 200 includes a light emitting unit 210 to emit light and a light receiving unit 220 to receive the light emitted from the light emitting unit 210. The light emitting unit 210 and the light receiving unit 220 are mounted to the wall of the housing 10 such that the light emitting unit 210 and the light receiving unit 220 are opposite to each other via the water tub 20. The light emitting unit 210 and the light receiving unit 220 are mounted at positions where the amount of light emitted from the light emitting unit 219 and received by the light receiving unit 220 is changed based on the height of the water tub caused by the weight of laundry in the rotary tub 30. For example, the light emitting unit 210 and the light receiving unit 220 may be mounted such that the amount of light received by the light receiving unit 220 is decreased when the laundry in the rotary tub 30 is light and the amount of light received by the light receiving unit 220 is increased when the laundry in the rotary tub 30 is heavy.

The light emitting unit 210 emits light to the light receiving unit 220 (see dotted lines in FIG. 9).

Before laundry is put into the rotary tub 30, the water tub 20 partially blocks a light path between the light emitting unit 210 and the light receiving unit 220. Consequently, some of the light emitted from the light emitting unit 210 is not received by the light receiving unit 220, with the result that the amount of the light received by the light receiving unit 220 is decreased.

When laundry is put into the rotary tub 30, the water tub 20 descends vertically according to the weight of the laundry, with the result that the amount of the light received by the light receiving unit 220 is increased. The heavier the laundry is, the more the water tub 20 descends, with the result that the amount of the light received by the light receiving unit 220 is further increased.

In this way, the sensor module 200 senses a light amount change based on the height of the water tub 20 before and after the laundry is put into the rotary tub 30, and the weight of the laundry is detected based on the light amount change.

As shown in FIG. 10, the sensor module 200 includes the light emitting unit 210 and the light receiving unit 220.

The light emitting unit 210 includes a light source 211 and a lens 212. The light source 211 may be composed of an LED or a laser. However, it is not limited thereto. The light source 211 emits light. The lens 212 enlarges a path of the light emitted from the light source 211. That is, the lens 212 disperses light L1 emitted from the light source 211 such that a plurality of light beams L2 are irradiated to the light receiving unit 220 in parallel. In place of the lens 212, a plurality of light sources 211 may be mounted in the light emitting unit 210 such that the light sources 211 are arranged in parallel toward the light receiving unit 220. In this case, the light emitting unit 210 and the light receiving unit 220 are disposed such that some of the light emitted from the light emitting unit 210 is blocked by the water tub 20 before laundry is put into the rotary tub 30 and thus is not received by the light receiving unit 220.

A controller 300 communicates with the sensor module 200 to receive light amount information from the light receiving unit 220 and compares the received light amount information with reference light amount information to detect the weight of the laundry. For example, the controller 300 receives a light intensity value from the light receiving unit 220, compares the received light intensity value with a predetermined value to calculate a light intensity difference value, and retrieves the weight of laundry corresponding to the light intensity difference value from a memory 310 to detect the weight of the laundry. The memory 310 previously stores the weight of laundry based on light intensity difference values.

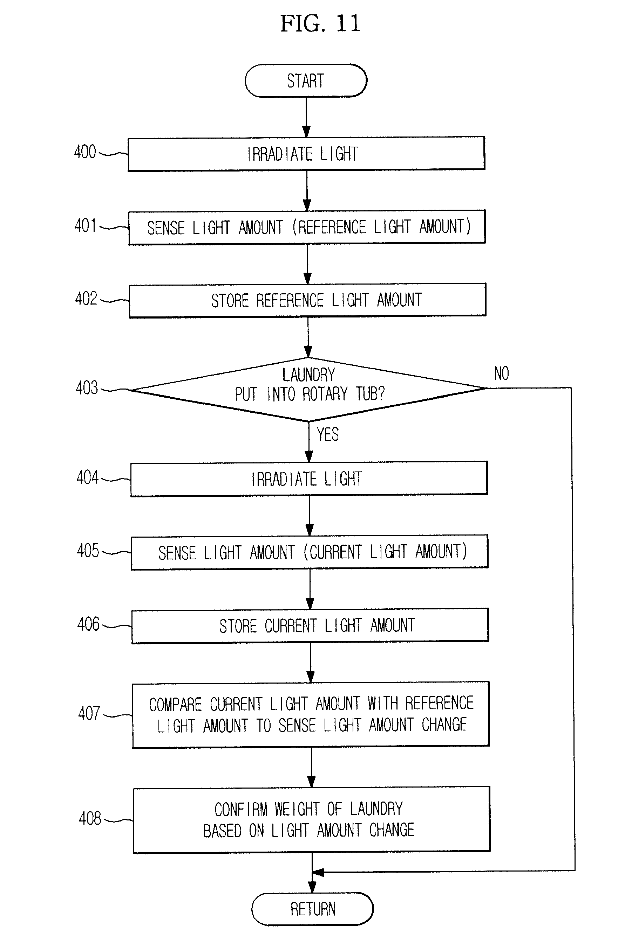

FIG. 11 is a flow chart illustrating a process of sensing light amount change based on the height of the water tub, which is changed depending upon the weight of laundry, in the drum washing machine shown in FIG. 9 to detect the weight of the laundry.

Referring to FIG. 11 together with FIG. 10, the controller 300 emits light through the light emitting unit 210 of the sensor module 200 before laundry is put into the rotary tub 30 (400).

After emitting the light, the controller 300 senses the amount of the light received by the right receiving unit 220 of the sensor module 200 through the right receiving unit 220 (401). At this time, some of the light emitted from the light emitting unit 210 is blocked by the water tub 20 and thus is not received by the light receiving unit 220. Consequently, the remainder of the light emitted from the light emitting unit 210 excluding the portion of the light blocked by the water tub 20 is received by the right receiving unit 220, with the result that a relatively small amount of the light is sensed.

After sensing the amount of the light, the controller 300 stores the sensed amount of the light in the memory 310 as a reference light amount value (402). The reference light amount is the amount of light emitted from the light emitting unit and received by the light receiving unit when no laundry is placed in the rotary tub 20. It is understood that operations 401-402 may be omitted. However, a reference light amount may be pre-stored or down-loaded by using wired or wireless network.

The controller 300 determines whether laundry has been put into the rotary tub 30 (403).

Upon determining at Operation 403 that the laundry has not been put into the rotary tub 30, the controller 300 returns to a predetermined routine.

On the other hand, upon determining at Operation 403 that the laundry has been put into the rotary tub 30, the controller 300 emits light through the light emitting unit 210 of the sensor module 200 (404).

After emitting the light, the controller 300 senses the amount of the light received by the right receiving unit 220 of the sensor module 200 through the right receiving unit 220 (405). At this time, a greater amount of light is received by the light receiving unit 220 than before the laundry is put into the rotary tub 30. This is because, when the laundry is put into the rotary tub 30, the water tub 20 descends in the direction indicated by an arrow in FIG. 10 according to the weight of the laundry, with the result that the portion of the light blocked by the water tub 20 is received by the light receiving unit 220. The heavier the laundry is, the greater the amount of light received by the light receiving unit 220.

After sensing the amount of the light, the controller 300 stores the sensed amount of the light in the memory 310 as a current light amount value (406).

Subsequently, the controller 300 compares the current light amount with a reference light amount stored in the memory 310 to sense light amount change (407).

Subsequently, the controller 300 retrieves the weight of laundry corresponding to the sensed light amount change from the memory 310 to detect the weight of the laundry (408).

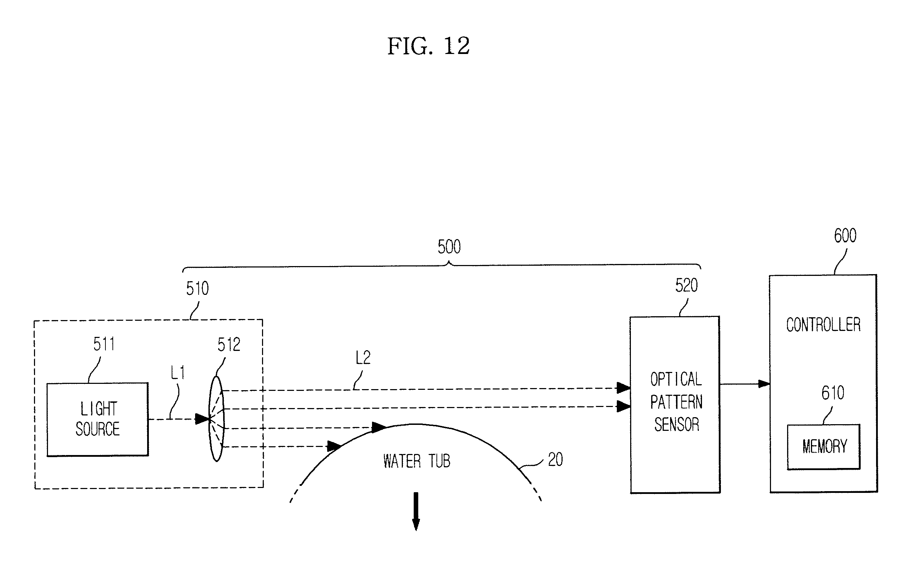

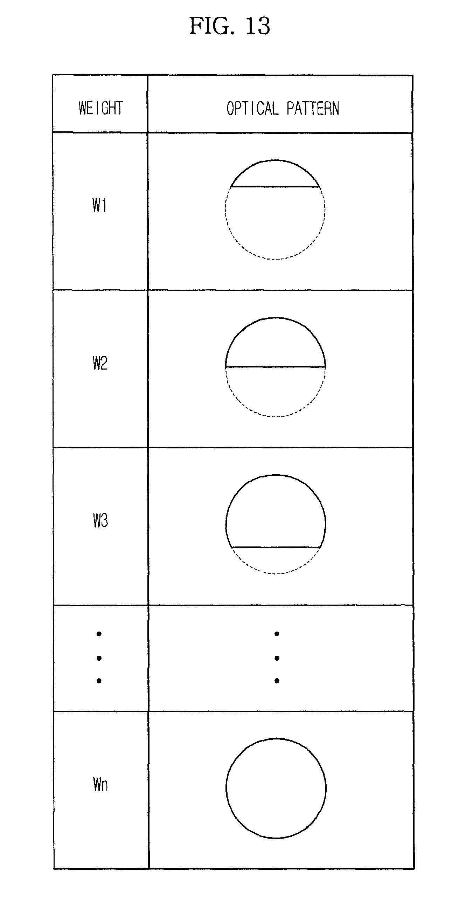

FIG. 12 is a schematic control block diagram of a drum washing machine having an optical pattern sensor to sense optical pattern change in place of the receiving unit of the sensor module, which is a modification of the drum washing machine shown in FIG. 9. FIG. 13 is a view illustrating optical patterns based on the weight of laundry sensed by the optical pattern sensor shown in FIG. 12.

As shown in FIG. 12, a sensor module 500 includes a light source unit 510 and an optical pattern sensor 520.

The light source unit 510 includes a light source 511 and a lens 512. The light source 511 may be composed of an LED or a laser. The light source 511 emits light. The lens 512 disperses light emitted from the light source 511 such that the dispersed light is received by the optical pattern sensor 520. In place of the lens 512, a plurality of light sources 511 may be arranged.

A controller 600 communicates with the sensor module 500 to receive an optical pattern from the optical pattern sensor 520 and retrieves the weight of laundry corresponding to the received optical pattern from a memory 610 to detect the weight of the laundry. The memory 610 previously stores the weight of laundry based on optical patterns, which are light emitting shapes of the light source unit according to the height of the water tub 20. As shown in FIG. 13, the optical pattern corresponding to the height of the water tub 20 gradually becomes a circle as the weight of the laundry is increased.

As is apparent from the above description, image change or light amount change based on displacement of the object, which is changed depending upon the weight of laundry, is sensed to detect the weight of the laundry, thereby improving reliability in detecting the weight of the laundry.

Although a few embodiments have been shown and described, it would be appreciated by those skilled in the art that changes may be made in these embodiments without departing from the principles and spirit of the invention, the scope of which is defined in the claims and their equivalents.

## Claims

1. A washing machine comprising:
an object whose displacement is changed depending upon weight of laundry;
a sensor module to sense an image, light amount or optical pattern changed depending upon the displacement of the object; and
a controller to detect the weight of the laundry based on the image change or the light amount change.

2. The washing machine according to claim 1, wherein the object is at least one of a suspension spring to support a water tub containing a rotary tub in a suspension manner, the water tub, a damper to dampen vibration generated from the water tub, or combinations thereof.

3. The washing machine according to claim 1, wherein the sensor module comprises a light source to irradiate light to the object, an image sensor to receive the light reflected from the object to create (detect) an image of the object, and an image processor to perform a comparison between a reference image, which is an image before the laundry is put into the rotary tub, and a current image, which is an image after the laundry is put into the rotary tub, to sense image change of the object.

4. The washing machine according to claim 3, wherein the image processor sets a mask window of a predetermined size in the reference image, calculates correlation coefficient values while moving the mask window with respect to the entirety of the current image by an arbitrary pixel unit, calculates a displacement value of the mask window with respect to a position having the largest correlation coefficient value, and recognizes the calculated displacement value as an image change value of the object.

5. The washing machine according to claim 4, wherein, if the object is a damper, the sensor module is provided at the damper to sense image change of the damper depending upon displacement of the damper.

6. The washing machine according to claim 5, wherein
the damper comprises a cylinder and a piston mounted in the cylinder in an advancing and retreating manner, and
the sensor module is provided at the cylinder or the piston to sense image change of the cylinder or the piston depending upon displacement of the cylinder or the piston.

7. The washing machine according to claim 4, wherein, if the object is a water tub, the sensor module is provided at a housing of the washing machine corresponding to the water tub to sense image change of the water tub depending upon displacement of the water tub.

8. The washing machine according to claim 7, wherein the sensor module senses image change of the water tub depending upon vertical displacement of the water tub.

9. The washing machine according to claim 4, wherein, if the object is a suspension spring, the sensor module is provided at the suspension spring to sense image change of the suspension spring depending upon displacement of the suspension spring.

10. The washing machine according to claim 1, wherein
the object is a water tub,
the sensor module comprises a light emitting unit to emit light and a light receiving unit to receive the light emitted from the light emitting unit, the sensor module being disposed such that an amount of the light, corresponding to displacement of the water tub, received by the light receiving unit is changed, and
the controller detects the weight of the laundry based on the change in the amount of the light received by the light receiving unit.

11. The washing machine according to claim 10, wherein the light emitting unit comprises a light source to emit light and a lens to disperse the light emitted from the light source such that the light is irradiated to the light receiving unit in parallel.

12. The washing machine according to claim 1, wherein
the object is a water tub,
the sensor module comprises a light source unit to emit light and an optical pattern sensor to receive the light emitted from the light source unit, the sensor module being disposed such that an optical pattern, corresponding to displacement of the water tub, sensed by the optical pattern sensor is changed, and
the controller detects the weight of the laundry based on the optical pattern sensed by the optical pattern sensor.

13. A control method of a washing machine having an object whose displacement is changed depending upon weight of laundry, the control method comprising:
sensing image change of the object depending upon the displacement of the object; and
detecting the weight of the laundry based on the sensed image change of the object.

14. The control method according to claim 13, wherein the object is at least one of a suspension spring to support a water tub containing a rotary tub in a suspension manner, the water tub, a damper to dampen vibration generated from the water tub, or combinations thereof.

15. The control method according to claim 14, wherein sensing image change of the object comprises setting a mask window of a predetermined size in a reference image, which is an image of the object before the laundry is put into the rotary tub, calculating correlation coefficient values while moving the mask window with respect to the entirety of a current image, which is an image of the object after the laundry is put into the rotary tub, by an arbitrary pixel unit, and calculating a displacement value of the mask window with respect to a position having the largest correlation coefficient value.
